# EUROPÄISCHE PATENTSCHRIFT

(11) **EP 3 956 116 B1**
(45) Veröffentlichungstag und Bekanntmachung des Hinweises auf die Patenterteilung: **18.03.2026**
(21) Anmeldenummer: 20713193.9
(22) Anmeldetag: 09.03.2020
(51) Int. Cl.: B27B 5/38, B23Q 11/00, B25F 5/00, F16D 41/07, F16D 49/20

(54) **WERKZEUGVORRICHTUNG UND VERFAHREN**
TOOL DEVICE AND METHOD
DISPOSITIF FORMANT OUTIL ET PROCÉDÉ

(30) Priorität: 16.04.2019 DE 102019205475
(43) Veröffentlichungstag der Anmeldung: 23.02.2022
(73) Patentinhaber: Festool GmbH, 73240 Wendlingen am Neckar (DE)
(72) Erfinder: SCHMID, Markus, 73240 Wendlingen am Neckar (DE); SCHOCK, Christian, 73614 Schorndorf (DE)
(74) Vertreter: Patentanwälte Magenbauer & Kollegen Partnerschaft mbB
(86) Internationale Anmeldenummer: PCT/EP2020/056165
(87) Internationale Veröffentlichungsnummer: WO 2020/212017

(56) Entgegenhaltungen:
- DE-T2- 602004 005 115
- FR-A1- 2 739 586
- US-A- 3 908 511
- US-A- 4 072 218
- US-B1- 7 055 417

## Beschreibung

Die Erfindung betrifft eine Werkzeugvorrichtung mit einem antreibbaren Werkzeug. Die Werkzeugvorrichtung umfasst eine mit dem Werkzeug gekoppelte Welle. Zweckmäßigerweise ist das Werkzeug über die Welle antreibbar.

Die EP 1 234 285 B1 beschreibt eine Tischsäge mit einem Bremsmechanismus, der wenigstens eine Klinke umfasst, die zum Stoppen des rotierenden Sägeblatts in Eingriff mit dem Sägeblatt gebracht wird.

Die DE 60 2004 005115 T2 beschreibt eine Sägewellenbremse mit einem Gleitblock, der in einer Warteposition ein aufgeweitetes Durchmesserelement einer Sägewelle nicht kontaktiert.

Die US 7 055 417 B1 beschreibt ein Bremssystem mit mehreren Sperrklinken, die mit einer Welle in Eingriff gebracht werden können, um ein Sägeblatt zu stoppen.

Die US 4 072 218 A beschreibt einen Spindelbremsmechanismus für eine Fräsmaschine. Zwei Bremsbacken können verschwenkt werden, um einen Bremskontakt mit der Maschinenspindel herzustellen. Die US 4 072 218 A offenbart eine Werkzeugvorrichtung nach dem Oberbegriff des Anspruchs 1 und ein Verfahren nach dem Oberbegriff des Anspruchs 13.

Die FR 2 739 586 A1 beschreibt eine Sägeblattbremse mit einer Schraubenfeder, die um eine Welle gewunden ist.

Eine Aufgabe der Erfindung besteht darin, eine Werkzeugvorrichtung bereitzustellen, die mit weniger Aufwand betrieben werden kann.

Die Aufgabe wird gelöst durch eine Werkzeugvorrichtung gemäß Anspruch 1. Die Werkzeugvorrichtung umfasst mehrere Bremskörper, die in Umfangsrichtung um die Welle herum verteilt angeordnet sind. Die Werkzeugvorrichtung ist ausgebildet, die mehreren Bremskörper im Rahmen eines Bremsvorgangs von einem Freigabezustand in einen Bremszustand zu versetzen. Im Bremszustand stehen die mehreren Bremskörper in Kontakt mit der Welle und üben dadurch eine Bremskraft auf die Welle aus, so dass das Werkzeug gebremst wird. Im Freigabezustand stehen die mehreren Bremskörper nicht in Kontakt mit der Welle. Die Werkzeugvorrichtung ist ausgebildet, im Rahmen des Bremsvorgangs die mehreren Bremskörper von dem Freigabezustand in einen Mitführzustand und von dem Mitführzustand in den Bremszustand zu versetzen, wobei die mehreren Bremskörper im Mitführzustand durch eine Bewegung der Welle mitgeführt werden, so dass die Versetzung der mehreren Bremskörper in den Bremszustand durch die Bewegung der Welle unterstützt wird.

Bei der eingangs genannten EP 1 234 285 B1 wird zum Stoppen des Sägeblatts eine Klinke in Eingriff mit dem Sägeblatt gebracht. Dabei kommt es in der Regel zu einer Beschädigung des Sägeblatts und der Klinke, so dass beides ausgetauscht werden muss, damit die Tischsäge weiter betrieben werden kann.

Im Gegensatz dazu bleiben bei der beschriebenen Werkzeugvorrichtung das Werkzeug und/oder die Bremskörper zweckmäßigerweise auch nach einem Bremsen des Werkzeugs unbeschädigt und/oder weiterhin benutzbar, so dass für den weiteren Betrieb kein Austausch erforderlich ist.

Aus diesem Grund kann die beschriebene Werkzeugvorrichtung mit weniger Aufwand betrieben werden.

Vorteilhafte Weiterbildungen sind Gegenstand der Unteransprüche.

Die Erfindung betrifft ferner ein Verfahren zum Bremsen eines mit einer Welle gekoppelten Werkzeugs, umfassend den Schritt: Versetzen von mehreren Bremskörpern, die in Umfangsrichtung um die Welle herum verteilt angeordnet sind, von einem Freigabezustand in einen Mitführzustand und von dem Mitführzustand in einen Bremszustand, wobei in dem Freigabezustand die mehreren Bremskörper nicht in Kontakt mit der Welle stehehen, in dem Bremszustand die mehreren Bremskörper in Kontakt mit der Welle stehen und dadurch eine Bremskraft auf die Welle ausüben, so dass das Werkzeug gebremst wird, und in dem Mitführzustand die mehreren Bremskörper durch eine Bewegung der Welle mitgeführt werden, so dass die Versetzung der mehreren Bremskörper in den Bremszustand durch die Bewegung der Welle unterstützt wird.

Weitere exemplarische Details sowie beispielhafte Ausführungsformen werden nachstehend unter Bezugnahme auf die Figuren erläutert. Dabei zeigt
- Figur 1: eine schematische Darstellung einer Werkzeugvorrichtung,
- Figur 2: eine Schnittdarstellung einer Bremseinrichtung und einer Welle der Werkzeugvorrichtung, wobei sich die Werkzeugvorrichtung in einem Bremszustand befindet,
- Figur 3: eine Schnittdarstellung einer Bremseinrichtung und einer Welle der Werkzeugvorrichtung, wobei sich die Werkzeugvorrichtung in einem Freigabezustand befindet,
- Figur 4: eine Schnittansicht eines einzelnen Bremskörpers, und
- Figur 5: eine perspektivische Darstellung eines Aktuierungsabschnitts.

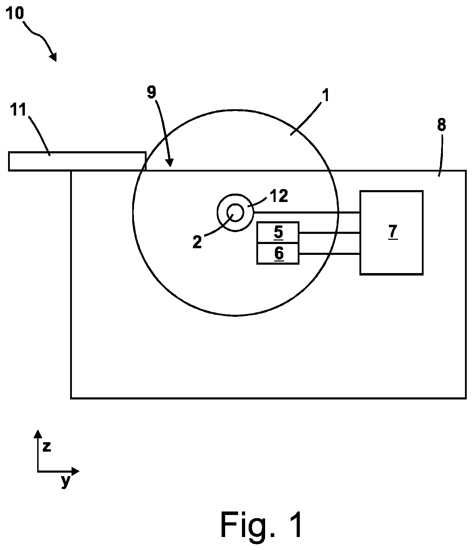

Bei der nachstehenden Erläuterung wird Bezug genommen auf die in den Figuren eingezeichneten Richtungen "x", "y" und "z" (Die x-Richtung verläuft in den Figuren 1 bis 4 senkrecht zur Zeichnungsebene). Die x-Richtung, y-Richtung und z-Richtung sind orthogonal zueinander ausgerichtet. Die x-Richtung und y-Richtung können auch als horizontale Richtung und die z-Richtung als vertikale Richtung bezeichnet werden. Die nachfolgend erwähnten Richtungen "Radialrichtung" und "Axialrichtung" sind insbesondere in Bezug auf die Längsachse der Welle 2 zu verstehen.

Die Figur 1 zeigt eine Werkzeugvorrichtung 10 mit einem antreibbaren Werkzeug 1. Die Werkzeugvorrichtung 10 umfasst eine mit dem Werkzeug 1 gekoppelte Welle 2, über die das Werkzeug 1 zweckmäßigerweise antreibbar ist.

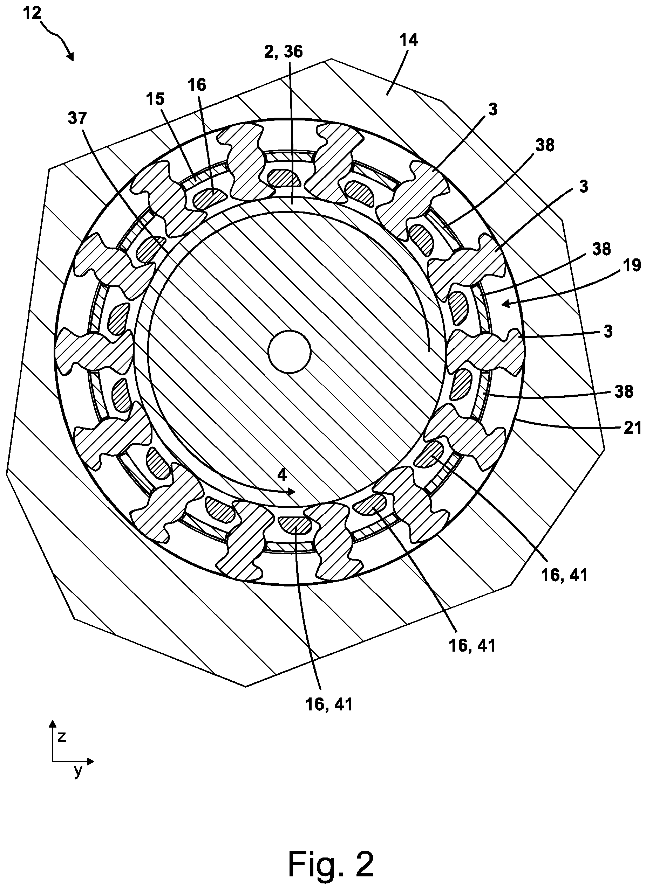

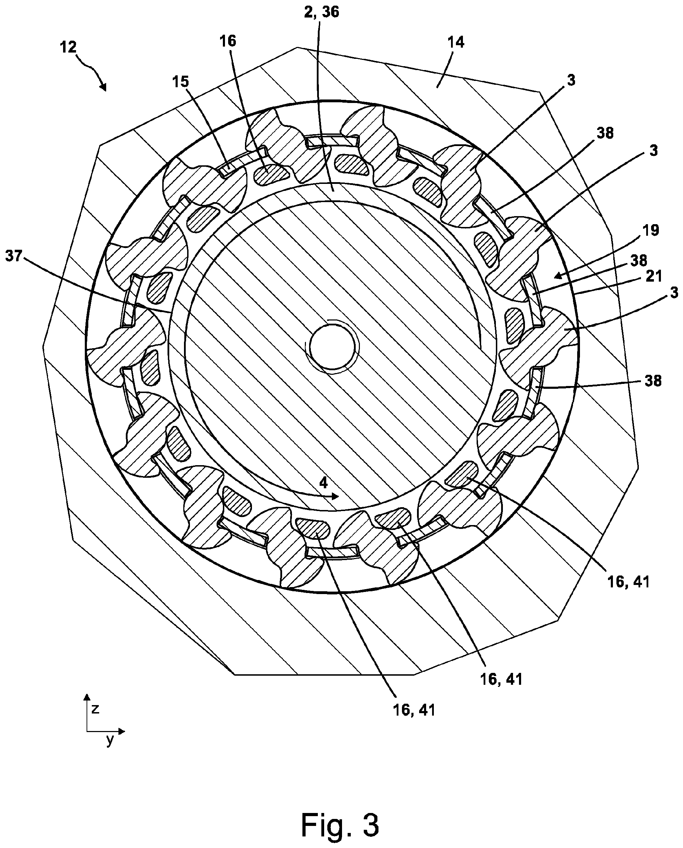

Die Werkzeugvorrichtung 10 umfasst ferner eine Mehrzahl an Bremskörpern 3, die exemplarisch in den Figuren 2 und 3 gezeigt sind. Der besseren Übersichtlichkeit halber sind in den Figuren 2 und 3 jeweils nur drei der gezeigten 14 Bremskörper mit dem Bezugszeichen "3" versehen. Die Bremskörper 3 sind in Umfangsrichtung 4 um die Welle 2 herum verteilt angeordnet.

Die Werkzeugvorrichtung 10 ist ausgebildet, die Bremskörper 3 im Rahmen eines Bremsvorgangs von einem Freigabezustand in einen Bremszustand zu versetzen.

Im Bremszustand, der exemplarisch in der Figur 2 gezeigt ist, stehen die Bremskörper 3 in Kontakt mit der Welle 2. Durch diesen Kontakt üben die Bremskörper 3 eine Bremskraft auf die Welle 2 aus. Durch die Bremskraft wird die Welle 2 und damit auch das Werkzeug 1 gebremst.

Im Freigabezustand stehen die Bremskörper 3 nicht in Kontakt mit der Welle 2.

Nachstehend werden weitere exemplarische Details erläutert. Zunächst zu Werkzeugvorrichtung 10:
Bei der Werkzeugvorrichtung 10 handelt es sich exemplarisch um eine Säge, insbesondere um eine Säge mit einem rotierenden Sägeblatt als das Werkzeug 1. Vorzugsweise handelt es sich bei der Werkzeugvorrichtung 10 um eine Tischkreissäge. Alternativ dazu kann die Werkzeugvorrichtung 10 auch als eine andere Werkzeugvorrichtung ausgebildet sein. Insbesondere kann die Werkzeugvorrichtung 10 als stationäre oder halbstationäre Maschine ausgebildet sein. Ferner kann die Werkzeugvorrichtung 10 als handgeführte Maschine, insbesondere handgeführte Werkzeugmaschine ausgebildet sein. Vorzugsweise ist die Werkzeugvorrichtung 10 als Kappsäge, Tauchsäge, Pendelhaubensäge, Bandsäge, Stichsäge, Oberfräse und/oder Winkelschleifer ausgebildet. Die Werkzeugvorrichtung 10 ist insbesondere ein Elektrowerkzeug.

Die Werkzeugvorrichtung 10 umfasst exemplarisch das Werkzeug 1, die Welle 2, eine Antriebseinheit 5, eine Aktoreinheit 6, und eine Steuereinheit 7. Ferner umfasst die Werkzeugvorrichtung 10 zweckmäßigerweise eine Tragestruktur 8 und/oder eine Auflagefläche 9.

Die Tragestruktur 8 ist exemplarisch als Gehäuse ausgeführt. In der Tragestruktur 8 sind zweckmäßigerweise die Antriebseinheit 5, die Aktoreinheit 6 und/oder die Steuereinheit 7 untergebracht.

Die Auflagefläche 9 ist exemplarisch an der Oberseite der Tragestruktur 8 angeordnet. Die Auflagefläche 9 dient zur Auflage eines Werkstücks 11, während das Werkstück 11 mit dem Werkzeug 1 bearbeitet wird. Exemplarisch stellt die Auflagefläche 9 eine x-y-Ebene dar. Exemplarisch ragt das Werkzeug 1 aus der Auflagefläche 9 heraus, insbesondere in z-Richtung.

Die Antriebseinheit 5 ist exemplarisch als Drehantrieb, insbesondere als elektrischer Drehantrieb, ausgebildet. Die Antriebseinheit 5 dient dazu, das Werkzeug 1 anzutreiben, insbesondere, das Werkzeug 1 in Rotation zu versetzen, vorzugsweise in Uhrzeigerrichtung. Das Werkzeug 1 ist über die Welle 2 mit der Antriebseinheit 5 gekoppelt. Die Antriebseinheit 5 ist ausgebildet, die Welle 2 anzutreiben, insbesondere in Rotation zu versetzen, worüber wiederum das Werkzeug 1 angetrieben wird. Exemplarisch ist das Werkzeug 1 drehfest mit der Welle 2 verbunden, so dass das Werkzeug 1 mit der rotierenden Welle 2 mitrotiert.

Bei der Welle 2 handelt es sich insbesondere um eine Welle des Antriebsstrangs der Werkzeugvorrichtung 10. Die Welle 2 und das Werkzeug 1 sind gegenüber der Tragestruktur 8 zweckmäßigerweise drehbar gelagert.

Die Welle 2 ist mir ihrer Längsachse parallel zur x-Richtung ausgerichtet. Exemplarisch hat die Welle 2 eine kreiszylindrische Grundgestalt. Die Drehachse des Werkzeugs 1 ist zweckmäßigerweise parallel zur x-Richtung ausgerichtet. Exemplarisch sind die Welle 2 und das Werkzeug 1 koaxial zueinander ausgerichtet.

Die Aktoreinheit 6 dient zweckmäßigerweise dazu, die Bremskörper 3 wahlweise in den Bremszustand oder den Freigabezustand zu versetzen, wie nachstehend noch näher erläutert wird.

Die Steuereinheit 7 ist zweckmäßigerweise ausgebildet, der Antriebseinheit 5 ein Antriebseinheit-Steuersignal bereitzustellen, um zu bewirken, dass die Antriebseinheit 5 das Werkzeug 1 antreibt.

Die Steuereinheit 7 ist zweckmäßigerweise ferner ausgebildet, der Aktoreinheit 6 ein Aktoreinheit-Steuersignal bereitzustellen, um zu bewirken, dass die Aktoreinheit 6 die Bremskörper 3 in den Bremszustand und/oder den Freigabezustand versetzt.

Die Steuereinheit 7 ist zweckmäßigerweise ferner ausgebildet, einen Notzustand zu erfassen und auf Basis des erfassten Notzustands den Bremsvorgang auszulösen, insbesondere durch Bereitstellung des Aktoreinheit-Steuersignals an die Aktoreinheit 6.

Bei dem Notzustand handelt es sich insbesondere um eine für einen Benutzer potentiell gefährliche Situation, bei der der Benutzer beispielsweise durch das Werkzeug und/oder das Werkstück verletzt werden kann.

Die Steuereinheit 7 ist zweckmäßigerweise ausgebildet, den Notzustand auf Basis eines detektierten Kontakts zwischen dem Werkzeug 1 und dem menschlichen Körper, beispielsweise einem Finger, zu erfassen.

Die Steuereinheit 7 ist zweckmäßigerweise ferner ausgebildet, als den Notzustand einen Kickback zu erfassen.

Mit dem Begriff "Kickback" ist insbesondere ein Zustand gemeint, bei dem während der Bearbeitung eines Werkstücks durch die Werkzeugvorrichtung eine plötzliche und unerwartete Kraft zwischen der Werkzeugvorrichtung und dem Werkstück auftritt, durch die die Werkzeugvorrichtung und/oder das Werkstück in Bewegung versetzt wird.

Vorzugsweise ist die Werkzeugvorrichtung 10, insbesondere die Steuereinheit 7, ausgebildet, dem Werkzeug 1 ein elektrisches Detektionssignal zuzuführen und auf Basis einer Änderung des Detektionssignals den Notzustand zu erfassen. Zweckmäßigerweise ist die Werkzeugvorrichtung 10, insbesondere die Steuereinheit 7 ausgebildet, dem Werkzeug 1 das elektrische Detektionssignal durch kapazitive Einkopplung zuzuführen. Zweckmäßigerweise ist die Werkzeugvorrichtung 10, insbesondere die Steuereinheit 7 ausgebildet, den Notzustand, insbesondere den Kontakt zwischen dem Werkzeug 1 und dem menschlichen Körper, auf Basis einer kapazitiven Änderung zu erfassen. Weitere Details dazu, wie die Erfassung des Notzustands exemplarisch realisiert werden kann, sind in der EP 1 234 285 B1 beschrieben.

Unter Bezugnahme auf die Figuren 2 und 3 soll nachstehend näher auf die Bremseinrichtung 12 eingegangen werden.

Die Werkzeugvorrichtung 10 umfasst eine Bremseinrichtung 12, die die vorstehend erwähnten Bremskörper 3 umfasst, mit denen die Welle 2 und damit auch das Werkzeug 1 gebremst werden kann. Die Werkzeugvorrichtung 10 ist ausgebildet, den Bremsvorgang des Werkzeugs 1 unter Verwendung der Bremseinrichtung 12 durchzuführen. Insbesondere ist die Werkzeugvorrichtung 10 ausgebildet, durch Durchführen des Bremsvorgangs das Werkzeug 1 innerhalb von 5 ms oder weniger zum Stillstand zu bringen, zweckmäßigerweise aus einem angetriebenen, insbesondere rotierenden, Zustand des Werkzeugs 1 heraus, in dem eine Bearbeitung des Werkstücks 11 erfolgt oder erfolgen kann.

Die Bremseinrichtung 12 ist vorzugsweise als Freilaufbremse ausgeführt. Zweckmäßigerweise ist die Bremseinrichtung 12 in der Werkzeugvorrichtung 10 integriert. Bei der Bremseinrichtung 12 handelt es sich insbesondere um eine (vorzugsweise über die Steuereinheit 7 und/oder die Aktoreinheit 6) aktive geschaltete Bremse. Die Bremseinrichtung 12 ist insbesondere reversible ausgeführt, so dass sie von dem Bremszustand zurück in den Freigabezustand versetzt werden kann (und von dort aus zweckmäßigerweise wieder in den Bremszustand), vorzugsweise ohne dafür eine Komponente der Bremseinrichtung 12 tauschen zu müssen.

Die Bremseinrichtung 12 umfasst exemplarisch die Bremskörper 3, einen Bremsabschnitt 14, einen Halteabschnitt 15 und einen Aktuierungsabschnitt 16.

Die Bremseinrichtung 12 funktioniert insbesondere wie folgt: Zum Bremsen des Werkzeugs 1 wird zweckmäßigerweise zunächst der Aktuierungsabschnitt 16 durch die Aktoreinheit bewegt, insbesondere rotiert. Durch die Bewegung des Aktuierungsabschnitts 16 werden die Bremskörper 3 von dem Freigabezustand in den Bremszustand versetzt, insbesondere durch jeweiliges Verschwenken der Bremskörper 3. Die Bremskörper 3 kommen auf dem Weg vom Freigabezustand zu dem Bremszustand in Kontakt mit der Welle 2 und werden durch die Drehbewegung der Welle 2 in ihrer Bewegung hin zu dem Bremszustand unterstützt. Im Bremszustand sind die Bremskörper 3 zwischen der Welle 2 und dem Bremsabschnitt 14 eingeklemmt. Insbesondere aufgrund einer Abstützung, insbesondere einer radialen und/oder tangentialen Abstützung, der Bremskörper 3 am Bremsabschnitt 14 üben die Bremskörper 3 eine Bremskraft auf die Welle 2 auf. Durch die Bremskraft wird die Welle 2 und damit auch das Werkzeug 1 gebremst, insbesondere bis zum Stillstand des Werkzeugs 1.

Nachstehend soll im Detail auf exemplarische Ausgestaltungen der einzelnen Komponenten der Bremseinrichtung 12 eingegangen werden:

### Zunächst zum Bremsabschnitt 14:

Der Bremsabschnitt 14 ist exemplarisch ein Teil der Tragestruktur 8 oder drehfest mit der Tragestruktur 8 verbunden, insbesondere mit der als Gehäuse ausgeführten Tragestruktur 8. Der Bremsabschnitt 14 ist insbesondere ein stationärer Abschnitt, insbesondere relativ zur Welle 2. Zweckmäßigerweise dreht sich der Bremsabschnitt 14 nicht mit der Welle 2 mit.

Gemäß einer möglichen Ausgestaltung ist der Bremsabschnitt 14 als Bremstrommel ausgeführt.

Exemplarisch umgibt das Bremselement 14 die Welle 2, insbesondere in Umfangsrichtung 4. Insbesondere umgreift das Bremselement 14 die Welle 2. Zweckmäßigerweise umgibt das Bremselement 14 ferner die Bremskörper 3 und insbesondere den Halteabschnitt 15 und/oder den Aktuierungsabschnitt 16.

Das Bremselement 14 definiert exemplarisch einen insbesondere zylindrischen Innenraum 19, in dem die Bremskörper 3 und die Welle 2 angeordnet sind. Zweckmäßigerweise ist in dem zylindrischen Innenraum 19 ferner der Halteabschnitt 15 und/oder der Aktuierungsabschnitt 16 angeordnet.

Der Bremsabschnitt 14 stellt zweckmäßigerweise eine Bremsfläche 21 bereit. Die Bremsfläche 21 ist zweckmäßigerweise die nach innen gerichtete Oberfläche des Bremsabschnitts 14, insbesondere die den zylindrischen Innenraum 19 definierende Oberfläche. Die Bremsfläche 21 hat exemplarisch die Form eines Zylindermantels. Zweckmäßigerweise stützt die Bremsfläche 21 die Bremskörper 3 ab.

Der Bremsabschnitt 14 ist zweckmäßigerweise als Außenring ausgeführt. Zweckmäßigerweise werden die Bremskörper 3 am Innenumfang des Bremsabschnitts 14 abgestützt.

Als Nächstes soll auf die Bremskörper 3 eingegangen werden:

### Exemplarisch sind 14 Bremskörper 3 vorhanden.

Zweckmäßigerweise können auch mehr oder weniger Bremskörper 3 vorhanden sein. Vorzugsweise sind wenigstens 3, 5, 7, 10, 12 oder 14 Bremskörper 3 vorhanden.

Bei den Bremskörpern 3 handelt es sich zweckmäßigerweise um voneinander separate Teile, insbesondere um Einzelteile.

Die Bremskörper 3 sind verteilt um die Welle 2 - insbesondere um die Längsachse der Welle 2 - herum angeordnet. Die Bremskörper 3 sind in Umfangsrichtung 4 um die Welle 2 herum angeordnet. Die Bremskörper 3 befinden sich zweckmäßigerweise in einem ringförmigen Bereich, der die Welle 2 umgibt und/oder koaxial zur Welle 2 angeordnet ist. Vorzugsweise befinden sich die Bremskörper 3 ausschließlich in diesem ringförmigen Bereich. Der ringförmige Bereich ist insbesondere ein Radialbereich in Bezug auf die Welle 2. Der ringförmige Bereich liegt insbesondere zwischen der Welle 2 und dem Bremsabschnitt 14.

Die Bremskörper 3 sind zweckmäßigerweise gleichmäßig um die Welle 2 herum angeordnet, insbesondere unter gleichen Winkelabständen. Die Bremskörper 3 liegen zweckmäßigerweise auf einer die Welle 2 umlaufenden Kreisbahn.

Die Bremskörper 3 sind zweckmäßigerweise zwischen der Welle 2 und dem Bremsabschnitt 14 angeordnet, insbesondere in radialer Richtung (bezogen auf die Längsachse der Welle 2). Zweckmäßigerweise werden die Bremskörper 3 radial am Bremselement 14 abgestützt. Die Bremskörper 3 sind insbesondere radial am Bremsabschnitt 14 fixiert. Die Bremskörper 3 sind insbesondere in Umfangsrichtung relativ zum Bremsabschnitt 14 fixiert. Zweckmäßigerweise sind die Bremskörper 3 in Umfangsrichtung am Halteabschnitt 15 fixiert. Der Halteabschnitt 15 ist zweckmäßigerweise drehfest mit dem Bremsabschnitt 14 verbunden.

Die Bremskörper 3 sind zweckmäßigerweise jeweils schwenkbar gelagert, zweckmäßigerweise gegenüber dem Bremsabschnitt 14 und/oder dem Halteabschnitt 15. Jeder Bremskörper 3 ist zweckmäßigerweise um eine eigene (gedachte) Schwenkachse schwenkbar gelagert. Die Schwenkachsen der Bremskörper 3 verlaufen zweckmäßigerweise parallel zur x-Richtung und/oder parallel zur Längsachse der Welle 2.

Vorzugsweise sind die Bremskörper 3 gegenüber dem Bremsabschnitt 14 und/oder dem Halteabschnitt 15 vorgespannt und/oder angefedert. Die Vorspannung und/oder Anfederung der Bremskörper 3 übt zweckmäßigerweise auf jeden Bremskörper 3 ein Drehmoment relativ zur jeweiligen Schwenkachse aus, insbesondere in Uhrzeigerrichtung.

Die Bremskörper 3 umfassen jeweils einen ersten Kontaktabschnitt 17 mit einer rampenförmigen ersten Kontaktkontur 18, die im Bremszustand in Kontakt mit der Welle 2 steht.

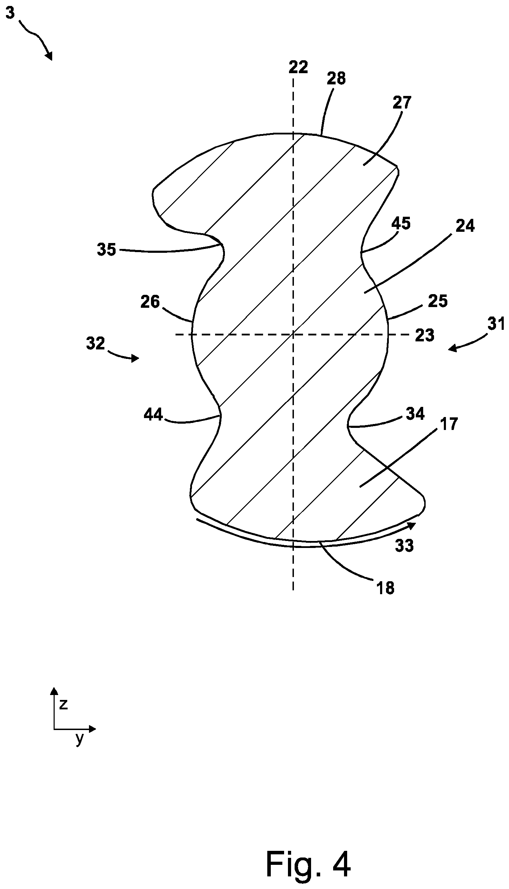

Unter Bezugnahme auf die Figur 4 soll eine exemplarische Ausgestaltung eines Bremskörpers 3 erläutert werden. Die Erläuterung gilt zweckmäßigerweise für mehrere, insbesondere für sämtliche Bremskörper 3 der Bremseinrichtung 12.

Der Bremskörper 3 erstreckt sich exemplarisch entlang einer Körperachse 22. Die Körperachse 22 liegt zweckmäßigerweise in einer y-z-Ebene und verläuft vorzugsweise orthogonal zur x-Richtung und/oder Längsachse der Welle 2. Die Erstreckung des Bremskörpers 3 entlang der Körperachse 22 ist vorzugsweise größer als die Erstreckung des Bremskörpers 3 entlang einer Querachse 23, die orthogonal zur Körperachse 22 verläuft und in einer y-z-Ebene liegt. Exemplarisch ist die Erstreckung des Bremskörpers 3 in Richtung der Körperachse 22 wenigstens 1,5 mal so groß wie die Erstreckung des Bremskörpers 3 in Richtung der Querachse 23.

Alternativ ist die Erstreckung des Bremskörpers 3 entlang der Körperachse 22 gleich oder kleiner als die Erstreckung des Bremskörpers entlang der Querachse 23.

Der Bremskörper 3 verfügt über eine erste Seite 31 und eine zweite Seite 32, die jeweils auf entgegengesetzten Seiten der Körperachse 22 liegen.

Der Bremskörper 3 umfasst exemplarisch einen Lagerabschnitt 24, der in Richtung der Körperachse 22 mittig angeordnet ist. Der Lagerabschnitt 24 umfasst vorzugsweise einen ersten Konvexbereich 25 und einen zweiten Konvexbereich 26. Die Konvexbereiche 25, 26 sind exemplarisch in entgegengesetzte Richtungen und/oder senkrecht zur Querachse 23 ausgerichtet. Exemplarisch liegt der erste Konvexbereich 25 auf der ersten Seite 31 und der zweite Konvexbereich 26 auf der zweiten Seite 32. Exemplarisch haben die Konvexbereiche 25, 26 jeweils die Form eines Kreisabschnitts.

Der Bremskörper 3 ist exemplarisch mit seinem Lagerabschnitt 24, insbesondere den Konvexbereichen 25, 26 schwenkbar an dem Halteabschnitt 15 gelagert. Die Form der Konvexbereiche 25, 26 definiert zweckmäßigerweise die von dem Bremskörper 3 durchführbare Schwenkbewegung.

An den Lagerabschnitt 24 schließt sich exemplarisch ein erster Kontaktabschnitt 17 an, insbesondere in eine erste Richtung entlang der Körperachse 22. Der erste Kontaktabschnitt 17 dient dazu, im Bremszustand die Welle 2 zu kontaktieren.

Der Kontaktabschnitt 17 umfasst eine rampenförmige erste Kontaktkontur 18, die im Bremszustand in Kontakt mit der Welle 2 steht. Die Kontaktkontur 18 ist exemplarisch senkrecht zur Körperachse 22 ausgerichtet. Die Kontaktkontur 18 hat exemplarisch einen gekrümmten, insbesondere konvexen, Verlauf.

Zweckmäßigerweise ändert sich der Radius des Bremskörpers 3 entlang des Umfangs. Insbesondere nimmt der Radius des Bremskörpers 3 - exemplarisch der Abstand zwischen der Schwenkachse des Bremskörpers 3 und der Kontaktkontur 18 - entlang einer ersten Kontaktkontur-Umfangsrichtung 33 zu. Die Kontaktkontur-Umfangsrichtung 33 verläuft exemplarisch von der zweiten Seite 32 zu ersten Seite 31 und/oder entgegengesetzt zur Drehrichtung der Welle 2.

An den Lagerabschnitt 24 schließt sich exemplarisch ein zweiter Kontaktabschnitt 27 an, insbesondere in zur ersten Richtung entgegengesetzten zweiten Richtung entlang der Körperachse 22. Der zweite Kontaktabschnitt 27 dient dazu, im Bremszustand den Bremsabschnitt 14 zu kontaktieren.

Der zweite Kontaktabschnitt 27 umfasst exemplarisch eine zweite Kontaktkontur 28, die im Bremszustand in Kontakt mit dem Bremsabschnitt 14 steht. Die Kontaktkontur 18 ist exemplarisch senkrecht zur Körperachse 22 ausgerichtet. Die Kontaktkontur 18 hat exemplarisch einen gekrümmten, insbesondere konvexen, Verlauf.

Der Bremskörper 3 umfasst zweckmäßigerweise ferner einen ersten Konkavbereich 34 und einen zweiten Konkavbereich 35.

Der erste Konkavbereich 34 stellt zweckmäßigerweise den auf der ersten Seite 31 liegenden Übergang von dem Lagerabschnitt 24 zu dem ersten Kontaktabschnitt 17 dar. Der zweite Konkavbereich 35 stellt zweckmäßigerweise den auf der zweiten Seite 32 liegenden Übergang von dem Lagerabschnitt 24 zu dem zweiten Kontaktabschnitt 27 dar.

Wie in der Figur 3 gezeigt, liegen die Bremskörper 3 im Freigabezustand zweckmäßigerweise mit ihren ersten und zweiten Konkavbereichen 34, 35 an dem Halteabschnitt 15 an.

Optional umfasst der Bremskörper 3 ferner einen dritten Konkavbereich 44 und einen vierten Konkavbereich 45. Der dritte Konkavbereich 44 stellt zweckmäßigerweise den auf der zweiten Seite 32 liegenden Übergang von dem Lagerabschnitt 24 zu dem ersten Kontaktabschnitt 17 dar. Der vierte Konkavbereich 45 stellt zweckmäßigerweise den auf der ersten Seite 31 liegenden Übergang von dem Lagerabschnitt 24 zu dem zweiten Kontaktabschnitt 27 dar.

Im Folgenden soll näher auf die Welle 2 eingegangen werden:
Die Welle 2 weist zweckmäßigerweise einen Axialabschnitt 36 auf, den die Bremskörper 3 im Bremszustand kontaktieren. Der Axialabschnitt 36 ist vorzugsweise kreiszylindrisch ausgeführt. Die Grundfläche des Axialabschnitts 36 hat vorzugsweise die Form eines exakten Kreises. Die Bremskörper 3 liegen im Bremszustand zweckmäßigerweise an der äußeren Mantelfläche 37 des Axialabschnitts 36 an. Die Mantelfläche 37 des Axialabschnitts 36 hat zweckmäßigerweise die Form einer (äußeren) Mantelfläche eins Kreiszylinders. Die Mantelfläche 37 des Axialabschnitts 36 weist zweckmäßigerweise keine Vorsprünge und/oder keine Einbuchtungen auf. Die Mantelfläche des Axialabschnitts 36 ist insbesondere eben und/oder glatt ausgeführt.

Nachstehend soll näher auf den Halteabschnitt 15 eingegangen werden.

Der Halteabschnitt 15 dient insbesondere dazu, die Bremskörper 3 in Umfangsrichtung abzustützen und/oder die schwenkbewegliche Lagerung der Bremskörper 3 bereitzustellen.

Der Halteabschnitt 15 ist exemplarisch als Käfig, insbesondere Freilaufkäfig, ausgeführt. Der Halteabschnitt 15 ist insbesondere ringförmig und/oder kreiszylinderförmig ausgeführt und zweckmäßigerweise koaxial zur Welle 2 angeordnet.

Der Halteabschnitt 15 ist zweckmäßigerweise zwischen der Welle 2 und dem Bremsabschnitt 14 angeordnet, insbesondere in Radialrichtung. Zweckmäßigerweise umläuft oder umgreift der Halteabschnitt 15 die Welle 2. Zweckmäßigerweise ist der Halteabschnitt 15 beabstandet von der Welle 2 angeordnet.

Vorzugsweise ist der Halteabschnitt 15 am Bremsabschnitt 14 fixiert. Insbesondere ist der Halteabschnitt 15 relativ zum Bremsabschnitt 14 drehfest gelagert. Der Halteabschnitt 15 ist insbesondere derart gelagert, dass er sich nicht mit der Welle 2 mitdreht.

Der Halteabschnitt 15 umfasst eine Mehrzahl von Haltesegmenten 38. Exemplarisch ist die Zahl der Haltesegmente 38 gleich der Zahl der Bremskörper 3. Der besseren Übersichtlichkeit halber sind in den Figuren 2 und 3 jeweils nur drei der gezeigten 14 Haltesegmente 38 mit dem Bezugszeichen "38" versehen.

Die Haltesegmente 38 liegen zweckmäßigerweise auf einer die Welle 2 umlaufenden Kreisbahn. Exemplarisch sind die Haltesegmente 38 von der Welle 2 und/oder dem Bremsabschnitt 14 beabstandet.

Die Haltesegmente 38 haben exemplarisch jeweils die Form eines Ringabschnitts. Jedes Haltesegment 38 ist zweckmäßigerweise zwischen zwei Bremskörpern 3 angeordnet. Jedes Haltesegment 38 verläuft zweckmäßigerweise von einem Lagerabschnitt 24 eines ersten Bremskörpers 3 zu einem Lagerabschnitt 24 eines zweiten Bremskörpers 3.

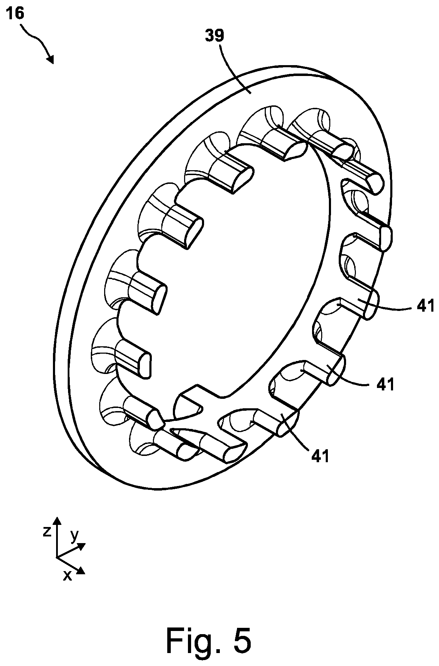

Nachstehend soll näher auf den Aktuierungsabschnitt 16 eingegangen werden. Eine exemplarische Ausgestaltung des Aktuierungsabschnitts 16 ist in der Figur 5 gezeigt.

Der Aktuierungsabschnitt 16 dient insbesondere dazu, die Versetzung der Bremskörper 3 von der Freigabestellung in die Bremsstellung und/oder von der Bremsstellung in die Freigabestellung zu bewirken.

Der Aktuierungsabschnitt 16 ist zweckmäßigerweise zwischen der Welle 2 und dem Bremsabschnitt 14 angeordnet, insbesondere in Radialrichtung. Vorzugsweise ist der Aktuierungsabschnitt 16 zwischen der Welle 2 und dem Halteabschnitt 15 angeordnet, insbesondere in Radialrichtung. Zweckmäßigerweise umläuft oder umgreift der Aktuierungsabschnitt 16 die Welle 2. Zweckmäßigerweise ist der Aktuierungsabschnitt 16 beabstandet von der Welle 2 angeordnet.

Vorzugsweise ist der Aktuierungsabschnitt 16 relativ zum Halteabschnitt 15 und/oder relativ zum Bremsabschnitt 14 beweglich, insbesondere drehbeweglich, gelagert.

Zweckmäßigerweise ist der Aktuierungsabschnitt 16 drehbar gelagert, insbesondere um eine parallel zur x-Richtung verlaufende Drehachse.

Der Aktuierungsabschnitt 16 ist insbesondere ringförmig und/oder kreiszylinderförmig ausgeführt und zweckmäßigerweise koaxial zur Welle 2 angeordnet. Der Aktuierungsabschnitt 16 ist zweckmäßigerweise als Aktuierungsring ausgeführt.

Der Aktuierungsabschnitt 16 umfasst zweckmäßigerweise einen insbesondere ringförmigen Basisabschnitt 39, der insbesondere koaxial zur x-Richtung ausgerichtet ist. Der Aktuierungsabschnitt 16 umfasst vorzugsweise eine Mehrzahl an Aktuierungsvorsprüngen 41, die sich zweckmäßigerweise in x-Richtung erstrecken, insbesondere ausgehend von dem Basisabschnitt 39. Exemplarisch ist die Zahl der Aktuierungsvorsprünge 41 gleich der Zahl der Bremskörper 3. Die Aktuierungsvorsprünge 41 sind insbesondere als Aktuierungsstifte ausgeführt. Der besseren Übersichtlichkeit halber sind in den Figuren 2, 3 und 5 jeweils nur drei Aktuierungsvorsprünge 41 mit dem Bezugszeichen "41" versehen.

Die Aktuierungsvorsprünge 41 liegen zweckmäßigerweise auf einer die Welle 2 umlaufenden Kreisbahn. Exemplarisch sind die Aktuierungsvorsprünge 41 von der Welle 2 und/oder dem Bremsabschnitt 14 beabstandet.

Jeder Aktuierungsvorsprung 41 ist zweckmäßigerweise zwischen zwei Bremskörpern 3 angeordnet. Jeder Aktuierungsvorsprung 41 liegt im Freigabezustand zweckmäßigerweise an einem jeweiligen Bremskörper 3 an.

Wie vorstehend bereits erwähnt, ist der Aktuierungsabschnitt 16 insbesondere drehbeweglich gelagert. Die Bewegung des Aktuierungsabschnitts 16 soll auch als Aktuierungsbewegung bezeichnet werden. Bei der Aktuierungsbewegung dreht sich der Aktuierungsabschnitt 16 zweckmäßigerweise nur um einen Drehwinkel von weniger als 90 Grad, insbesondere weniger als 45 Grad oder weniger als 30 Grad.

Der Aktuierungsabschnitt 16 wird zweckmäßigerweise durch die Aktoreinheit 6 in die Aktuierungsbewegung versetzt.

Die Aktoreinheit 6 umfasst zweckmäßigerweise einen elektrischen Aktor, um den Aktuierungsabschnitt 16 in die Aktuierungsbewegung zu versetzen. Zweckmäßigerweise umfasst die Aktoreinheit 6 einen Hubmagnet und/oder eine Piezoeinheit, um den Aktuierungsabschnitt 16 in die Aktuierungsbewegung zu versetzen. Alternativ oder zusätzlich dazu umfasst die Aktoreinheit 6 einen Pneumatikzylinder, um den Aktuierungsabschnitt 16 in die Aktuierungsbewegung zu versetzen.

Ferner kann die Aktoreinheit 6 zur Versetzung des Aktuierungsabschnitts 16 in die Aktuierungsbewegung einen anders ausgebildeten Aktor umfassen, insbesondere einen piezoelektrischen Aktor, einen elektromagnetischen Aktor, einen Formgedächtnislegierungs-Aktor (FGL-Aktor), einen Elektroaktive-Polymere-Aktor (EAP-Aktor), einen Magnetic-Shape-Memory-Aktor (MSN-Aktor), einen pneumatischen Aktor, einen hydraulischen Aktor, einen Pyroaktor, einen mechanischen Aktor, einen elektrostriktiven Aktor und/oder einen thermischen Aktor.

Im Folgenden soll näher auf den Bremszustand und den Freigabezustand eingegangen werden.

### Zunächst zum Freigabezustand:

In Freigabezustand besteht kein Kontakt zwischen den Bremskörpern 3 und der insbesondere rotierenden Welle 2. Im Freigabezustand ist ein Spalt, insbesondere ein Luftspalt, zwischen den Bremskörpern 3 und der Welle 2, insbesondere in radialer Richtung (relativ zur Längsachse der Welle 2) vorhanden. Die Bremskörper 3 üben im Freigabezustand keine Bremskraft auf die Welle 2 und/oder das Werkzeug 1 aus.

Jede Körperachse 22 der Bremskörper 3 zeigt zweckmäßigerweise in eine andere Raumrichtung. Zweckmäßigerweise ist im Freigabezustand jede Körperachse 22 relativ zu einer Radialrichtung (in Bezug auf die Welle 2) verschwenkt, insbesondere jeweils um den gleichen Winkel.

Exemplarisch werden die Bremskörper 3 von dem Aktuierungsabschnitt 16 in dem Freigabezustand gehalten. Exemplarisch liegt an jedem Bremskörper 3 jeweils ein Aktuierungsvorsprung 41 an, der den jeweiligen Bremskörper 3 in der verschwenkten Stellung hält. Jeder Aktuierungsvorsprung 41 liegt zweckmäßigerweise am Lagerabschnitt 24 und/oder am ersten Kontaktabschnitt 17 eines jeweiligen Bremskörpers 3 an.

Zweckmäßigerweise besteht im Freigabezustand kein Kontakt zwischen drehenden und stehenden Teilen, so dass insbesondere kein Verlustmoment vorhanden ist.

Nachfolgend soll auf den Bremszustand eingegangen werden.

Exemplarisch stehen die Bremskörper 3 im Bremszustand in Kontakt mit dem Bremsabschnitt 14.

Die Bremskörper 3 sind im Bremszustand zwischen dem Bremsabschnitt 14 und der Welle 2 eingeklemmt, insbesondere in radialer Richtung (bezogen auf die Längsachse der Welle 2). Die Bremskörper 3 können zweckmäßigerweise auch als Klemmkörper bezeichnet werden. In Bremszustand verbinden die Bremskörper 3 zweckmäßigerweise die Welle 2 und den Bremsabschnitt 14 kraftschlüssig. Insbesondere sind die Bremskörper 3 im Bremszustand jeweils mit der Welle 2 und dem Bremsabschnitt 14 kraftschlüssig verbunden.

Im Bremszustand sind die Bremskörper 3 gegenüber dem Freigabezustand jeweils um ihre eigene Schwenkachse verschwenkt. Jede Körperachse 22 der Bremskörper 3 zeigt zweckmäßigerweise in eine andere Raumrichtung. Zweckmäßigerweise ist jede Körperachse 22 in eine Radialrichtung (in Bezug auf die Welle 2) ausgerichtet.

Im Folgenden soll näher darauf eingegangen werden, wie die Bremskörper 3 von der Freigabestellung in die Bremsstellung versetzt werden.

Die Werkzeugvorrichtung 10 ist ausgebildet, die Bremskörper 3 durch Verschwenken der Bremskörper 3 von dem Freigabezustand in den Bremszustand zu versetzen. Zweckmäßigerweise werden die Bremskörper 3 alle in die gleiche Drehrichtung verschwenkt. Insbesondere ist die Drehrichtung entgegengesetzt zur Drehrichtung der Welle 2. Zweckmäßigerweise erfolgt eine Verschwenkung nach Innen. Insbesondere erfolgt eine Verschwenkung um eine Achse parallel zur Drehachse der Welle. Durch die rampenförmige Kontur ergibt sich eine Änderung des effektiven Durchmessers der Bremskörper. Zweckmäßigerweise ist die Werkzeugvorrichtung 10 ferner ausgebildet, die Bremskörper 3 durch Verschwenken der Bremskörper 3 von dem Bremszustand in den Freigabezustand zu versetzen. Zweckmäßigerweise ist die Werkzeugvorrichtung 10 ausgebildet, durch Schwenken der einzelnen Bremskörper 3 die bremsende Kraftkopplung zwischen der Welle 2 und dem Bremsabschnitt 14 wahlweise herzustellen oder zu lösen.

Der Aktuierungsabschnitt 16 steht zweckmäßigerweise in Kontakt mit den Bremskörpern 3. Die Werkzeugvorrichtung 10 ist vorzugsweise ausgebildet, den Aktuierungsabschnitt 16 in eine Aktuierungsbewegung zu versetzen, um zu bewirken, dass die Bremskörper 3 von dem Freigabezustand in den Bremszustand wechseln. Die Aktuierungsbewegung ist insbesondere eine Drehbewegung des Aktuierungsabschnitts 16.

Zweckmäßigerweise ist die Werkzeugvorrichtung 10 ausgebildet, den Aktuierungsabschnitt 16 auf Basis des erfassten Notzustands in die Aktuierungsbewegung zu versetzen.

Das Verschwenken der Bremskörper 3 aus dem Freigabezustand wird zweckmäßigerweise durch die Aktuierungsbewegung des Aktuierungsabschnitts bewirkt. Die Aktuierungsbewegung ist insbesondere eine Bewegung des Aktuierungsabschnitts 16 relativ zum Halteabschnitt 15 und/oder relativ zum Bremsabschnitt 14.

Gemäß einer exemplarischen Ausgestaltung sind die Bremskörper 3 vorgespannt. Die Vorspannung der Bremskörper 3 wird zweckmäßigerweise dadurch erzielt, dass die Bremskörper 3 angefedert sind, insbesondere mittels eines oder mehrerer (in den Figuren nicht gezeigter) Federelemente. Der Aktuierungsabschnitt 15 wirkt im Freigabezustand der Vorspannung entgegen, insbesondere durch Formschluss, und verhindert oder blockiert so die Schwenkbewegung der Bremskörper 3. Insbesondere ist der Aktuierungsabschnitt 15, exemplarisch die Aktuierungsvorsprünge, in den jeweiligen Schwenkbahnen der Bremskörper 3 angeordnet, so dass die Bremskörper 3 nicht in Richtung hin zu dem Bremszustand verschwenkt werden können. Durch die Aktuierungsbewegung des Aktuierungsabschnitts 15 wird die Sperrung der Schwenkbewegung durch den Aktuierungsabschnitt 15 aufgehoben; exemplarisch werden die Aktuierungsvorsprünge 41 jeweils aus den Schwenkbahnen der Bremskörper herausbewegt. Die für die Verschwenkung der Bremskörper 3 benötigten Schwenkbahnen werden freigegeben. Durch die Vorspannung der Bremskörper 3 erfolgt ein Verschwenken der Bremskörper 3. Insbesondere werden die ersten Kontaktabschnitte 17 hin zu der Welle 2 verschwenkt. Exemplarisch erfolgt die Verschwenkung in Uhrzeigerrichtung.

Gemäß einer alternativen Ausgestaltung dient der Aktuierungsabschnitt 16 dazu, die Bremskörper 3 durch Anschieben in die Schwenkbewegung zu versetzen und so von dem Freigabezustand in den Bremszustand zu versetzen. Zweckmäßigerweise werden die Bremskörper 3 durch den Aktuierungsabschnitt 16 aktiv verschwenkt. Bei dieser alternativen Ausgestaltung sind die Bremsköper 3 zweckmäßigerweise nicht vorgespannt und/oder nicht angefedert.

Die Bremseinrichtung 12 ist selbstverstärkend ausgeführt, so dass eine Bewegung der Welle 2 dazu genutzt wird, die Bremswirkung der Bremskörper 3 auf die Welle 2 zu verstärken und/oder die Bremszeit zu verkürzen.

Die Werkzeugvorrichtung 10 ist ausgebildet, im Rahmen des Bremsvorgangs die Bremskörper 3 von dem Freigabezustand in einen Mitführzustand und von dem Mitführzustand in den Bremszustand zu versetzen. Der Mitführzustand ist insbesondere in einer Schwenkstellung der Bremskörper 3 zwischen dem Freigabezustand und dem Bremszustand gegeben. Im Mitführzustand werden die Bremskörper 3 durch eine Bewegung der Welle 2 mitgeführt, so dass der Wechsel in den Bremszustand durch die Bewegung der Welle 2 unterstützt wird.

Die Bremskörper 3 werden also ausgehend vom Freigabezustand in den Mitführzustand bewegt. Im Mitführzustand kommt es zu einem Kontakt zwischen den Bremskörpern 3 und der Welle 2, insbesondere zwischen den ersten Kontaktabschnitten 17 und der Welle 2. Aufgrund dieses Kontakts werden die Bremskörper 3 von der Drehbewegung der Welle 2 mitgeführt. Zweckmäßigerweise werden die Bremskörper 3 im Mitführzustand von der Welle 2 in die gleiche Richtung mitgeführt in die sie sich vor dem Mitführzustand bewegt haben.

Exemplarisch bewegen sich die Bremskörper 3 aus dem Freigabezustand heraus zunächst in eine erste Richtung, exemplarisch in Uhrzeigerrichtung. Die Bremskörper 3, insbesondere die ersten Kontaktabschnitte 17, werden bei dieser Bewegung hin zu der Welle 2 geführt, bis sie die Welle 2 berühren und der Mitführzustand gegeben ist. Im Mitführzustand werden die Bremskörper 3 durch die Drehung der Welle 2 weiter in die erste Richtung bewegt, bis sich die Bremskörper 3 in dem Bremszustand befinden. Die Welle 2 dreht sich exemplarisch entgegen des Uhrzeigersinns.

Vorzugsweise ist die von den Bremskörpern 3 auf die Welle 2 ausgeübte Bremskraft im Bremszustand größer als im Mitführzustand.

Wie vorstehend bereits erläutert, ist die Kontaktkontur 18 rampenförmig ausgestaltet. Während der Verschwenkung des Bremskörpers 3 rollt die Kontaktkontur 18 zweckmäßigerweise an der Welle 2 ab. Aufgrund des zunehmenden Radius der Kontaktkontur wird das Bremselement 3 immer stärker gegen die Welle 2 gepresst. Insbesondere wird das Bremselement 3 während der Verschwenkung immer stärker zwischen die Welle 2 und den Bremsabschnitt 14 geklemmt oder komprimiert. Dadurch steigt zweckmäßigerweise die Bremskraft immer weiter an.

Nachfolgend soll ein exemplarischer Betrieb der Werkzeugvorrichtung 10 beschrieben werden.

Zweckmäßigerweise wird das Werkzeug 1 von der Antriebseinheit 5 angetrieben. Das Werkstück 11 wird von dem angetriebenen Werkzeug 1 bearbeitet. Bei der Bearbeitung kommt es zu einem Kontakt zwischen dem Werkzeug 1 und dem Körper des Benutzers. Die Steuereinheit 7 erfasst diesen Kontakt als Notzustand und löst daraufhin die Bremseinrichtung 12 aus. Die Aktoreinheit 6 bewegt den Aktuierungsabschnitt 16, wodurch die Bremskörper 3 in den Bremszustand versetzt werden, wodurch wiederum die Welle 2 und das Werkzeug 1 bis zum Stillstand abgebremst werden. Das Abbremsen erfolgt insbesondere in weniger als 5 ms.

Zweckmäßigerweise werden die Bremskörper 3 zurück in den Freigabezustand versetzt, insbesondere durch die Aktoreinheit 6 und/oder eine manuelle Betätigung. Das Werkzeug 1 wird wieder von der Antriebseinheit 5 angetrieben. Das Werkstück 11 oder ein anderes Werkstück wird dann von dem Werkzeug 1 bearbeitet. Zweckmäßigerweise erfolgt zwischen dem Abbremsen des Werkzeugs 1 und/oder der Welle 2 und der erneuten Bearbeitung kein Austausch des Werkzeugs 1 und/oder der Bremskörper 3.

Gemäß einer bevorzugten Ausgestaltung ist die Werkzeugvorrichtung 10 ausgebildet, die Bremskörper 3 zurück in den Freigabezustand zu versetzen, insbesondere mittels der Aktoreinheit 6 und/oder einer weiteren (in den Figuren nicht gezeigten) Aktoreinheit. Vorzugsweise ist die Werkzeugvorrichtung 10 ausgebildet, die Bremskörper 3 in Ansprechen auf einen Rücksetzbefehl zurück in den Freigabezustand zu versetzen. Der Rücksetzbefehl wird zweckmäßigerweise durch einen Benutzer in die Werkzeugvorrichtung 10 eingegeben, beispielsweise über eine Eingabevorrichtung, insbesondere eine Taste.

Alternativ oder zusätzlich dazu ist die Werkzeugvorrichtung 10 derart ausgebildet, dass sich die Bremskörper 3 über manuelle Betätigung des Werkzeugs 1 und/oder der Welle 2 und/oder eines mit der Welle 2 mechanische gekoppelten Bedienelements, beispielsweise eines Hebels, zurück in den Freigabezustand versetzen lassen.

## Patentansprüche

1. Werkzeugvorrichtung (10) mit einem antreibbaren Werkzeug (1), umfassend eine mit dem Werkzeug (1) gekoppelte Welle (2), ferner umfassend mehrere Bremskörper (3), die in Umfangsrichtung (4) um die Welle (2) herum verteilt angeordnet sind, wobei die Werkzeugvorrichtung (10) ausgebildet ist, im Rahmen eines Bremsvorgangs die mehreren Bremskörper (3) von einem Freigabezustand in einen Bremszustand zu versetzen, wobei im Bremszustand die mehreren Bremskörper (3) in Kontakt mit der Welle stehen und dadurch eine Bremskraft auf die Welle (2) ausüben, so dass die Welle (2) und dadurch auch das Werkzeug (1) gebremst werden und wobei im Freigabezustand die mehreren Bremskörper (3) nicht in Kontakt mit der Welle (2) stehen, **dadurch gekennzeichnet, dass** die Werkzeugvorrichtung ausgebildet ist, im Rahmen des Bremsvorgangs die mehreren Bremskörper (3) von dem Freigabezustand in einen Mitführzustand und von dem Mitführzustand in den Bremszustand zu versetzen, wobei die mehreren Bremskörper (3) im Mitführzustand durch eine Bewegung der Welle (2) mitgeführt werden, so dass die Versetzung der mehreren Bremskörper in den Bremszustand durch die Bewegung der Welle (2) unterstützt wird.

2. Werkzeugvorrichtung (10) nach Anspruch 1, wobei die Werkzeugvorrichtung (10) ausgebildet ist, die mehreren Bremskörper (3) durch Verschwenken von dem Freigabezustand in den Bremszustand zu versetzen.

3. Werkzeugvorrichtung (10) nach einem der voranstehenden Ansprüche, wobei die mehreren Bremskörper (3) jeweils einen ersten Kontaktabschnitt (17) mit einer rampenförmigen Kontaktkontur (18) umfassen, die im Bremszustand in Kontakt mit der Welle (2) steht.

4. Werkzeugvorrichtung (10) nach einem der voranstehenden Ansprüche, wobei die Werkzeugvorrichtung (10) ferner ein Bremsabschnitt (14) umfasst, der die Welle (2) umgibt.

5. Werkzeugvorrichtung (10) nach Anspruch 4, wobei die mehreren Bremskörper (3) im Bremszustand zwischen dem Bremsabschnitt (14) und der Welle (2) eingeklemmt sind.

6. Werkzeugvorrichtung (10) nach einem der voranstehenden Ansprüche, wobei die Werkzeugvorrichtung (10) einen mit den mehreren Bremskörpern (3) in Kontakt stehenden und/oder in Kontakt bringbaren Aktuierungsabschnitt (16) umfasst und ausgebildet ist, mit dem Aktuierungsabschnitt (16) eine Aktuierungsbewegung durchzuführen, um zu bewirken, dass die mehreren Bremskörper (3) von dem Freigabezustand in den Bremszustand versetzt werden.

7. Werkzeugvorrichtung (10) nach einem der voranstehenden Ansprüche, wobei die Werkzeugvorrichtung (10) ausgebildet ist, einen Notzustand zu erfassen und auf Basis des erfassten Notzustands den Bremsvorgang auszulösen.

8. Werkzeugvorrichtung (10) nach Anspruch 7, wobei die Werkzeugvorrichtung (10) ausgebildet ist, als den Notzustand einen Kontakt zwischen dem Werkzeug (1) und dem menschlichen Körper zu erfassen.

9. Werkzeugvorrichtung (10) nach Anspruch 7 oder 8, wobei die Werkzeugvorrichtung (10) ausgebildet ist, als den Notzustand einen Kickback zu erfassen.

10. Werkzeugvorrichtung (10) nach einem der voranstehenden Ansprüche, wobei die Werkzeugvorrichtung (10) ausgebildet ist, durch Durchführen des Bremsvorgangs das Werkzeug (1) innerhalb von 10 ms oder weniger, zweckmäßigerweise 5 ms oder weniger, zum Stillstand zu bringen.

11. Werkzeugvorrichtung (10) nach einem der voranstehenden Ansprüche, wobei die Werkzeugvorrichtung (10) ausgebildet ist, die mehreren Bremskörper (3) von dem Bremszustand zurück in den Freigabezustand zu versetzen.

12. Werkzeugvorrichtung (10) nach einem der voranstehenden Ansprüche, wobei die Werkzeugvorrichtung (10) derart ausgebildet ist, dass sich der eine oder die mehreren Bremskörper (3) durch eine manuelle Betätigung, insbesondere des Werkzeugs (1), der Welle (2) und/oder eines mit der Welle (2) gekoppelten Bedienelements, von dem Bremszustand zurück in den Freigabezustand versetzen lassen.

13. Verfahren zum Bremsen eines mit einer Welle (2) gekoppelten Werkzeugs (1), umfassend den Schritt: Versetzen von mehreren Bremskörpern (3), die in Umfangsrichtung (4) um die Welle (2) herum verteilt angeordnet sind, von einem Freigabezustand in einen Bremszustand, wobei in dem Freigabezustand die mehreren Bremskörper (3) nicht in Kontakt mit der Welle stehen, in dem Bremszustand die mehreren Bremskörper (3) in Kontakt mit der Welle (2) stehen und dadurch eine Bremskraft auf die Welle (2) ausüben, so dass die Welle (2) und das Werkzeug (1) gebremst werden, **dadurch gekennzeichnet, dass** die mehreren Bremskörper (3) von dem Freigabezustand in einen Mitführzustand und von dem Mitführzustand in den Bremszustand versetzt werden und dass in dem Mitführzustand die mehreren Bremskörper (3) durch eine Bewegung der Welle (2) mitgeführt werden, so dass die Versetzung der mehreren Bremskörper in den Bremszustand durch die Bewegung der Welle (2) unterstützt wird.

14. Verfahren nach Anspruch 13, wobei das Verfahren mit einer Werkzeugvorrichtung (10) nach einem der Ansprüche 1 bis 12 durchgeführt wird.

## Claims

1. Tool apparatus (10) with a drivable tool (1), comprising a shaft (2) coupled to the tool (1), further comprising plural braking bodies (3), which are distributed around the shaft (2) in a circumferential direction (4), wherein the tool apparatus (10) is adapted to bring, in the course of a braking procedure, the plural braking bodies (3) from a release state into a braking state, wherein in the braking state the plural braking bodies (3) are in contact with the shaft and thereby exert a braking force upon the shaft (2), so that the shaft (2) and thereby also the tool (1) are braked and wherein in the release state the plural braking bodies (3) are not in contact with the shaft (2), **characterized in that** the tool apparatus is adapted to bring, in the course of the braking procedure, the plural braking bodies (3) from the release state into a carry-along state and from the carry-along state into the braking state, wherein the plural braking bodies (3) are carried along in the carry-along state by a movement of the shaft (2), so that the bringing of the plural braking bodies into the braking state is assisted by the movement of the shaft (2).

2. Tool apparatus (10) according to claim 1, wherein the tool apparatus (10) is adapted to bring the plural braking bodies (3) from the release state into the braking state by way of pivoting.

3. Tool apparatus (10) according to one of the preceding claims, wherein the plural braking bodies (3) each comprise a first contact section (17) with a ramp-shaped contact contour (18) which in the braking state is in contact with the shaft (2).

4. Tool apparatus (10) according to one of the preceding claims, wherein the tool apparatus (10) further comprises a braking section (14) which surrounds the shaft (2).

5. Tool apparatus (10) according to claim 4, wherein in the braking state the plural braking bodies (3) are clamped between the braking section (14) and the shaft (2).

6. Tool apparatus (10) according to one of the preceding claims, wherein the tool apparatus (10) comprises an actuation section (16), which is in contact or can be brought into contact with the plural braking bodies (3), and is adapted to carry out an actuation movement with the actuation section (16) to cause the plural braking bodies (3) being brought from the release state into the braking state.

7. Tool apparatus (10) according to one of the preceding claims, wherein the tool apparatus (10) is adapted to detect an emergency state and to activate the braking procedure on the basis of the detected emergency state.

8. Tool apparatus (10) according to claim 7, wherein the tool apparatus (10) is adapted to detect, as the emergency state, a contact between the tool (1) and the human body.

9. Tool apparatus (10) according to claim 7 or 8, wherein the tool apparatus (10) is adapted to detect a kickback as the emergency state.

10. Tool apparatus (10) according to one of the preceding claims, wherein the tool apparatus (10) is adapted to bring the tool (1) to a standstill within 10 ms or less, expediently 5 ms or less, by way of carrying out the braking procedure.

11. Tool apparatus (10) according to one of the preceding claims, wherein the tool apparatus (10) is adapted to bring the plural braking bodies (3) from the braking state back into the release state.

12. Tool apparatus (10) according to one of the preceding claims, wherein the tool apparatus (10) is adapted in such a manner that the one or plural braking bodies (3) can be brought from the braking state back into the release state by way of a manual actuation, in particular of the tool (1), the shaft (2) and/or an operating element coupled to the shaft (2).

13. Method for braking a tool (1) coupled to a shaft (2), comprising the step:
bringing plural braking bodies (3), which are distributed around the shaft (2) in a circumferential direction (4), from a release state into a braking state, wherein in the release state the plural braking bodies (3) are not in contact with the shaft, in the braking state the plural braking bodies (3) are in contact with the shaft (2) and thereby exert a braking force upon the shaft (2), so that the shaft (2) and the tool (1) are braked, **characterized in that** the plural braking bodies (3) are brought from the release state into a carry-along state and from the carry-along state into the braking state and that, in the carry-along state, the braking bodies (3) are carried along by a movement of the shaft (2), so that the bringing of the plural braking bodies into the braking state is assisted by the movement of the shaft (2).

14. Method according to claim 13, wherein the method is carried out with a tool apparatus (10) according to one of the claims 1 to 12.

## Revendications

1. Dispositif formant outil (10) avec un outil (1) pouvant être entraîné comprenant un arbre (2) couplé à l'outil (1), comprenant en outre plusieurs corps de frein (3), qui sont disposés de manière répartie tout autour de l'arbre (2) dans la direction périphérique (4), dans lequel le dispositif formant outil (10) est réalisé pour amener, dans le cadre d'un processus de freinage, les plusieurs corps de frein (3) d'un état de relâchement à un état de freinage, dans lequel, dans l'état de freinage, les plusieurs corps de frein (3) sont en contact avec l'arbre et exercent ainsi une force de freinage sur l'arbre (2), de telle sorte que l'arbre (2) et par conséquent également l'outil (1) sont freinés et dans lequel, dans l'état de relâchement, les plusieurs corps de frein (3) ne sont pas en contact avec l'arbre (2), **caractérisé en ce que** le dispositif formant outil est réalisé pour amener les plusieurs corps de frein (3) de l'état de relâchement dans un état d'entraînement et de l'état d'entraînement dans l'état de freinage dans le cadre du processus de freinage, dans lequel les plusieurs corps de frein (3) sont entraînés dans l'état d'entraînement par un mouvement de l'arbre (2), de telle sorte que le déplacement des plusieurs corps de frein dans l'état de freinage est assisté par le mouvement de l'arbre (2).

2. Dispositif formant outil (10) selon la revendication 1, dans lequel le dispositif formant outil (10) est réalisé pour amener les plusieurs corps de frein (3) par pivotement de l'état de relâchement dans l'état de freinage.

3. Dispositif formant outil (10) selon l'une quelconque des revendications précédentes, dans lequel les plusieurs corps de frein (3) comprennent chacun une première section de contact (17) avec un contour de contact (18) en forme de rampe qui est en contact avec l'arbre (2) dans l'état de freinage.

4. Dispositif formant outil (10) selon l'une quelconque des revendications précédentes, dans lequel le dispositif formant outil (10) comprend en outre une section de frein (14) qui entoure l'arbre (2).

5. Dispositif formant outil (10) selon la revendication 4, dans lequel les plusieurs corps de frein (3) sont coincés dans l'état de freinage entre la section de frein (14) et l'arbre (2).

6. Dispositif formant outil (10) selon l'une quelconque des revendications précédentes, dans lequel le dispositif formant outil (10) comprend une section d'actionnement (16) en contact et/ou pouvant être amenée en contact avec les plusieurs corps de frein (3) et est réalisé pour effectuer un mouvement d'actionnement avec la section d'actionnement (16) pour amener les plusieurs corps de frein (3) de l'état de relâchement dans l'état de freinage.

7. Dispositif formant outil (10) selon l'une quelconque des revendications précédentes, dans lequel le dispositif formant outil (10) est réalisé pour détecter un état d'urgence et déclencher le processus de freinage sur la base de l'état d'urgence détecté.

8. Dispositif formant outil (10) selon la revendication 7, dans lequel le dispositif formant outil (10) est réalisé pour détecter un contact entre l'outil (1) et le corps humain en tant qu'état d'urgence.

9. Dispositif formant outil (10) selon la revendication 7 ou 8, dans lequel le dispositif formant outil (10) est réalisé pour détecter un rebond comme état d'urgence.

10. Dispositif formant outil (10) selon l'une quelconque des revendications précédentes, dans lequel le dispositif formant outil (10) est réalisé pour immobiliser l'outil (1) en effectuant le processus de freinage dans un délai de 10 ms ou moins, de manière appropriée de 5 ms ou moins.

11. Dispositif formant outil (10) selon l'une quelconque des revendications précédentes, dans lequel le dispositif formant outil (10) est réalisé pour ramener les plusieurs corps de frein (3) de l'état de freinage à l'état de relâchement.

12. Dispositif formant outil (10) selon l'une quelconque des revendications précédentes, dans lequel le dispositif formant outil (10) est réalisé de telle sorte que le ou les plusieurs corps de frein (3) peuvent être ramenés de l'état de freinage dans l'état de relâchement par une commande manuelle, en particulier de l'outil (1), de l'arbre (2) et/ou d'un élément de commande couplé à l'arbre (2).

13. Procédé de freinage d'un outil (1) couplé à un arbre (2) comprenant l'étape :
de déplacement de plusieurs corps de frein (3), qui sont disposés tout autour de l'arbre (2) dans la direction périphérique (4), d'un état de relâchement dans un état de freinage, dans lequel dans l'état de relâchement les plusieurs corps de frein (3) ne sont pas en contact avec l'arbre, dans l'état de freinage les plusieurs corps de frein (3) sont en contact avec l'arbre (2) et exercent ainsi une force de freinage sur l'arbre (2), de telle sorte que l'arbre (2) et l'outil (1) sont freinés, **caractérisé en ce que** les plusieurs corps de frein (3) passent de l'état de relâchement dans un état d'entraînement et de l'état d'entraînement dans l'état de freinage et que, dans l'état d'entraînement, les plusieurs corps de frein (3) sont entraînés par un mouvement de l'arbre (2), de telle sorte que le déplacement des plusieurs corps de frein dans l'état de freinage est assisté par le mouvement de l'arbre (2).

14. Procédé selon la revendication 13, dans lequel le procédé est réalisé avec un dispositif formant outil (10) selon l'une quelconque des revendications 1 à 12.
